# EUROPÄISCHE PATENTSCHRIFT

(11) **EP 0 693 041 B1**
(45) Veröffentlichungstag und Bekanntmachung des Hinweises auf die Patenterteilung: **05.11.1997**
(21) Anmeldenummer: 93920736.1
(22) Anmeldetag: 16.09.1993
(51) Int. Cl.: C02F 9/00, C02F 11/14

(54) **VERFAHREN UND VORRICHTUNG ZUR VERARBEITUNG UND/ODER ENTWÄSSERUNG DES AUS ABWASSERGRUBEN, INSBESONDERE KLEINKLÄRANLAGEN, ENTNOMMENEN SCHLAMMWASSERS**
PROCESS AND DEVICE FOR PROCESSING AND/OR DEWATERING SLUDGE LIQUOR FROM WASTE WATER TANKS, IN PARTICULAR SMALL SEWERAGE PURIFICATION PLANTS
PROCEDE ET DISPOSITIF DE TRAITEMENT ET/OU DE DESHYDRATATION DU LIQUIDE SURNAGEANT RETIRE DE FOSSES D'EAUX RESIDUAIRES, NOTAMMENT D'INSTALLATIONS D'EPURATION DE PETITES DIMENSIONS

(30) Priorität: 10.04.1993 DE 4311837
(43) Veröffentlichungstag der Anmeldung: 24.01.1996
(73) Patentinhaber: Simon Moos Maskinfabrik A/S, DK-6400 Sonderborg (DK)
(72) Erfinder: MOOS, Simon, DK-6400 Sonderborg (DK)
(74) Vertreter: Zapf, Christoph, Dipl.-Ing.
(86) Internationale Anmeldenummer: EP9302501
(87) Internationale Veröffentlichungsnummer: WO9424059

(56) Entgegenhaltungen:
- EP-A- 0 165 883
- DE-A- 3 219 963
- DE-A- 3 840 276
- GB-A- 2 004 859
- US-A- 3 893 656
- US-A- 4 383 920

## Beschreibung

Die Erfindung betrifft ein Verfahren und eine Vorrichtung zur Verarbeitung und/oder Entwässerung des aus Abwassergruben, insbesondere Kleinkläranlagen, entnommenen Schlammwassers, nach dem Oberbegriff des Patentanspruches 1 bzw. 6.

### Stand der Technik

Gemäß DK-A-149 305 sind ein Verfahren und eine Vorrichtung zur Entwässerung von Schlamm durch die Schwerkraft bekannt, wobei der Schlamm in einen Schlammbehälter gepumpt wird, wobei der Behälter ein oder mehrere Filterelemente aufweist, durch welche eine Trennung des eindickbaren Schlammes von dem wässrigen Anteil, d. h. von dem gereinigten Wasser bzw. Filtratwasser erfolgt. Auf die Anmelderin gehen ferner ein Verfahren und eine Vorrichtung zurück, bei dem auf einem Fahrzeug eine Behältergruppe angeordnet ist, die einen rohrförmigen Tank zur Aufnahme des hochgepumpten Schlammwassers und eine diesen Behälter umfassende, mit Filterwänden versehene Entwässerungskammer aufweist, wobei durch die Filterwände die eigentliche. Entwässerungskammer in Bezug auf eine tiefer gelegene Rückstandswasserkammer abgetrennt wird Neben einem Flockungsbehälter sind eine Flockungspumpe, ein Kompressor bzw. eine Vakuumpumpe zum Hochpumpen des Schlammes aus einer Hauskläranlage odgl. und eine hydraulisch arbeitende Schlammpumpe vorhanden, welche aus dem Schlammrohr, wenn das Aufpumpen beendet ist, den Schlamm zur Entwässerungseinheit befördert, wobei gleichzeitig Flockungsmittel zur Eindickung des Schlammes zugesetzt werden Dieses Entwässerungssystem zeichnet sich durch den kompakten Aufbau, wenige Arbeitskammern und bei Einsatz eines schnell wirkenden Flockungsmittels (Polymer) durch eine schnelle Arbeitsweise an Ort und Stelle einer Hauskläranlage aus.
Eine Kurzdarstellung dieses unter dem Namen KSE-System bekanntgewordenen Verfahrens und der Vorrichtung findet sich in der Firmenschrift "Das Moos KSE-System - Rationelle Entleerung der Hauskläranlagen mit dem effektiven Moos KSE-System", Simon Moos Maskinfabrik, Sønderborg, nicht datiert.

Zwar sind noch ein Verfahren und eine Vorrichtung bekannt (EP 01 65 883 A1), bei der auf einem fahrbaren Anhänger der zu reinigende Schlamm über eine Einlaßleitung unmittelbar einem Grobfilterbereich und dann einem eine Vielzahl von Kammern aufweisenden Flockungsmittelbereich zugeführt wird. Diesem sind drei weitere Behälter nachgeordnet: Zuerst ein erster, ein Gemisch von Filtrat und Schlamm aufnehmender Setzbehälter, in welchem dieses Gemisch durch Preßluftstrahlen bearbeitet wird. Aus ihm wird das noch Partikelchen aufweisende Filtrat dem zweiten Setzbehälter zugeführt, in dem im wesentlichen die gleiche Behandlung durch Preßluftstrahlen erfolgt. Aus dem ersten und zweiten Setzbehälter wird der Schlamm dem dritten, also dem eigentlichen Schlammbehälter zugeführt. Das gereinigte Filtrat kann unmittelbar an die Umwelt abgegeben werden, während der Schlamm des dritten Behälters über eine Zentrifugal-Filterpresse bearbeitet wird,um die Trockensubstanz zu erhalten. In den beiden Absetzbehältern wird aber praktisch keine Trockensubstanz gewonnen. Sie besitzen keine durch Filtersiebe getrennte, separate Kammern. Kein Setzbehälter als solcher hat Mittel, um ihn im Bodenbereich besonders zu reinigen und in beiden erfolgt im wesentlichen die gleiche Zerstäubung der Partikelchen, durch Preßluftstrahlen, zuletzt in zweiter Stufe auf etwa 150 Mikron Größe. Insbesondere sind keine Rohrleitungen und Steuerbauteile vorhanden, um das gereinigte Filtrat wiederum der Einlaßleitung zuzuführen und von hier in die gleiche Abwassergrube zurückzugeben.
Eine Flüssigkeit mit einem UV-Strahler zu entkeimen, ist für eine andere Gattung von Medium bekannt, nämlich für Trinkwasser in Wüstengebieten odgl. (DE-OS 38 40 276 A1). Trinkwasseranlagen sind jedoch stationäre Anlagen. Die Behandlungskammer liegt vor der Verbrauchsstelle, nicht in der Rückleitung zur Herkunftsquelle. Ein geeignetes Strahlungsmaximum ist nicht zu entnehmen.
Die GB-A-2 004 859 offenbart gattungsgemäß ein Verfahren zur Verarbeitung des Inhaltes von Abwassergruben und die dazu bestimmte, fahrbare Anlage mit einem Sammeltank, einer Flockungs- und einer Entwässerungseinheit sowie einer Rückführungsleitung. Während der Fahrt erfolgt in der Entwässerungseinheit die Entwässerung des chemisch behandelten Schlammwassers sowie die Sammlung des entwässerten Schlamms und des Frischwassers, welches über die Rückführungsleitung in die jeweils nächste Grube überführt wird.

### Ziel der Erfindung

Die Erfindung betrifft eine weitere Ausgestaltung und Vervollständigung des KSE-Systems. Hierbei wurde gleichzeitig folgendes berücksichtigt: In den letzten Jahren sind die Forderungen hinsichtlich der Beschaffenheit des durch die Anlage gereinigten Wassers (Filtratwasser, Rejektwasser) in Bezug auf Bakterien und Keimüberführung zwischen den einzelnen Hauskläranlagen aus auch zum PH-Wert immer strenger geworden. Die bekannten Vorrichtungen tragen dem nicht oder nur teilweise Rechnung.

Ferner genügen die bekannten Vorrichtungen zur Verarbeitung und/oder Entwässerung des Schlammes aus Abwassergruben nicht genügend der Forderung, daß nach Beendigung eines Arbeitsvorganges an einer Grube, bei dem ja mehrere Kubikmeter Schlammwasser in die Entwässerungsvorrichtung aufgepumpt werden, wobei der Schlamm auch zunächst dort verbleibt und lediglich das gereinigte Filtratwasser zur Grube daselbst zurückgegeben wird, daß am Ende dieses Arbeitsschrittes die zugehörigen Rohrleitungen und/oder Behälter hinreichend gereinigt sind. Einmal wird hierdurch der Anteil an Bakterien und schädlichen Keimen in der Anlage vergrößert, zum anderen das Fassungsvermögen der Behälter verringert, und durch die Rückstände, die sich an denInnenwänden der Rohrleitungen niederschlagen und sich verhärten können, wird die Funktionsfähigkeit der Anlage beeinträchtigt. Dies gilt besonders, wenn sich im aufgepumpten Schlamm größere Fremdkörper befinden.
Der Erfindung liegt die Aufgabe zugrunde, bei einer Vorrichtung zur Bearbeitung und/oder Entwässerung des aus Abwassergruben entnommenen Schlammwassers eingangs genannten Art die Entwässerungsanlage weitgehend vollständig und in kurzer Zeit zu reinigen, nachdem das Aufpumpen und Rückführen des Schlammwassers erfolgt war, als auch die Keime und Bakterien abzutöten.

### Zusammenfassung der Lösung

Diese Aufgabe wird erfindungsgemäß durch die im Kennzeichen des Patentanspruches 1 angegebenen Verfahrensschritte gelöst. Vorteilhafte Ausgestaltungen sind in den Unteransprüchen 2 - 5 dargestellt.
Eine vorteilhaft angepaßte, kompakte und die einzelnen Verfahrensschritte berücksichtigende Vorrichtung zur Ausführung des Verfahrens ist in den Ansprüchen 6 - 11 dargestellt.
Durch die Erfindung werden insbesondere folgende Vorteile erzielt: Die Entwässerungskammern für Schlamm und/oder Filtratwasser, die zur Entwässerungseinheit gehören, werden vollständig von Schlammresten und größeren Fremdkörpern bzw. dem Filtratwasser entleert. Hierdurch ergibt sich insbesondere ein Reinigungseffekt für zugehörige Kammern und Behälter der Entwässerungseinheit und es wird gerade vermieden, daß solche, nunmehr abgeführte Schlamm- und Filtratreste sich mit dem neu aufgepumten Schlamm und Schlammwasser, die aus anderen Hauskläranlagen stammt, vermischen und Keime sowie Bakterien überführen.

Dies wird gemäß weiterer Ausgestaltung der Erfindung dadurch noch verbessert, indem das rückzuführende Filtratwasser einer die Keime und Bakterien abtötenden Strahlung in der Anlage selbst ausgesetzt wird. Dies wird bei Einsatz von Ultraviolettlicht verstärkt, insbesondere dann, wenn UV-Licht mit dem Maximum der Strahlungsamplitude bei 253,7 Nanometer verwendet wird.
Durch die Vorrichtung gemäß weiteren Patentansprüchen zur Ausführung des Verfahrens ist ein dem Verfahren spezifisch angepaßtes Pumpen- und Rohrleitungssystem angegeben, durch welches die Entleerung der Kammern bzw. Behälter der Entwässerungseinheit in kurzer Zeit mit relativ wenig Bauteilen und in kompakter Anordnung der letzteren zueinander erreicht werden kann. Dies gilt sinngemäß für die Anordnung der Steinfalle in einer Schlammzuleitung. Eine Anpassung sieht vor, daß ein Bereich der Steinfalle auch in einer Schlammrückleitung vorgesehen wird. Die Bestrahlung durch UV- odgl. Licht wird durch zweckmäßige Anordnung der Bestrahlungskammer in einer vorbestimmten Filtratrückleitung und/oder durch Anbringung von Reflektoren für den Strahler verstärkt.

### Kurze Beschreibung der Zeichnung

Eine den besten Ausführungsweg angebende Ausführungsform der Erfindung ist in der Zeichnung dargestellt und wird im folgenden näher erläutert. Es zeigt:
Fig. 1 in einer schematischen Seitenansicht die Entwässerungsvorrichtung, im wesentlichen bei der Entleerung einer Kammergrube, wobei die Bezeichnung S für den Schlamm, L für Luft und weiter Dreiecke für die Schlammbildung verwendet sind;
Fig. 2 die gleiche Vorrichtung, aber im wesentlichen während des Aufpumpens des Schlammes aus der Kammergrube, der Flockungsmittelzugabe sowie der Rückführung des gereinigten Filtratwassers in die Kammergrube, wobei der Buchstabe R das Filtratwasser, P das Polymer, S den Schlamm und der wellige Strich oder R in den Behältern das Filtratwasser bezeichnet;
Fig. 3 die gleiche Vorrichtung, jedoch für die Darstellung der Arbeitsweise, als auch Stellung der Bauteile bei der Entleerung des Aufpumprohres der ersten Entwässerungskammer;
Fig. 4 die Vorrichtung, bei der die am Ende des ersten Arbeitsschrittes erfolgenden Reinigungsvorgänge veranschaulicht werden, wobei unter S neben dem Schlamm auch Steine bezeichnet sind.

### Beschreibung der Einzelheiten

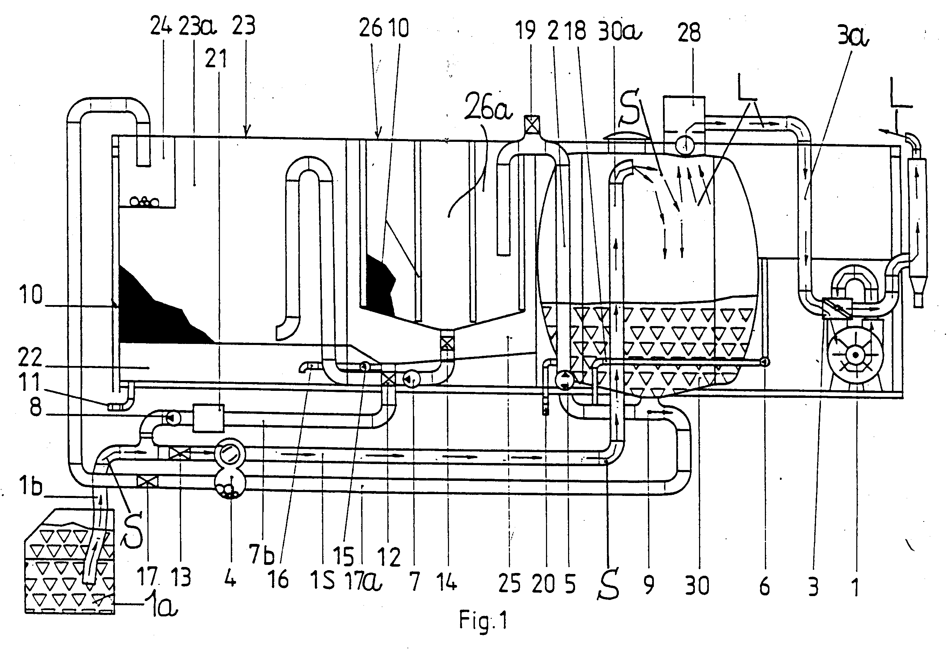

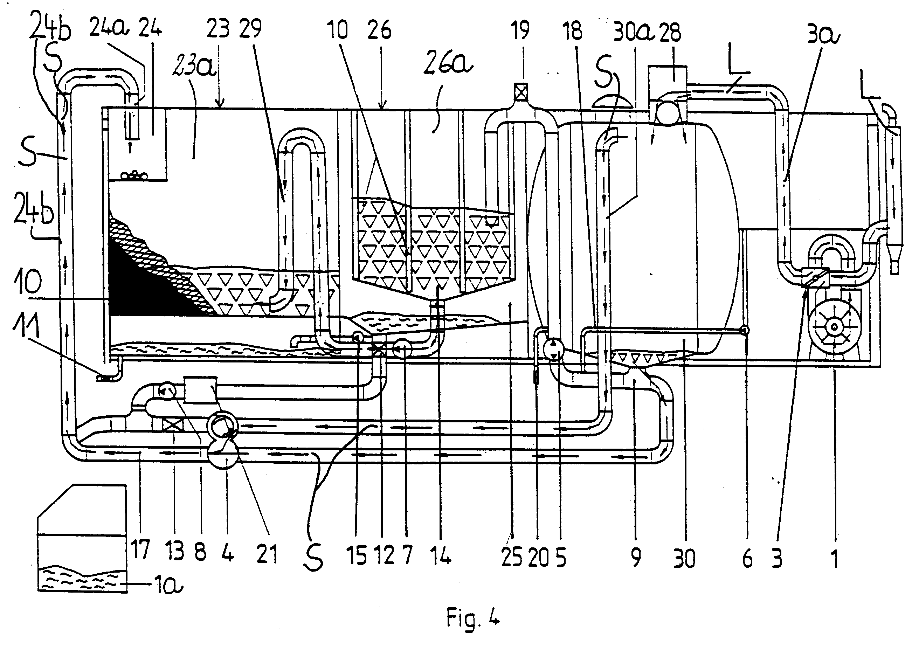

Die Vorrichtung weist eine Vakuumpumpe 1, vgl. Fig. 1, auf, die in einem anderen Schaltzustand als Kompressor, vgl. Fig. 4, arbeiten kann. Über einen Strömungsteiler, der als Klappenventil 3 ausgebildet sein kann, steht die Druck- bzw. Saugseite der Vakuumpumpe über ein Anschlußrohr 3a und einen Luftverteiler pneumatisch mit dem oberen Bereich des Schlammtankes 30 in Verbindung.

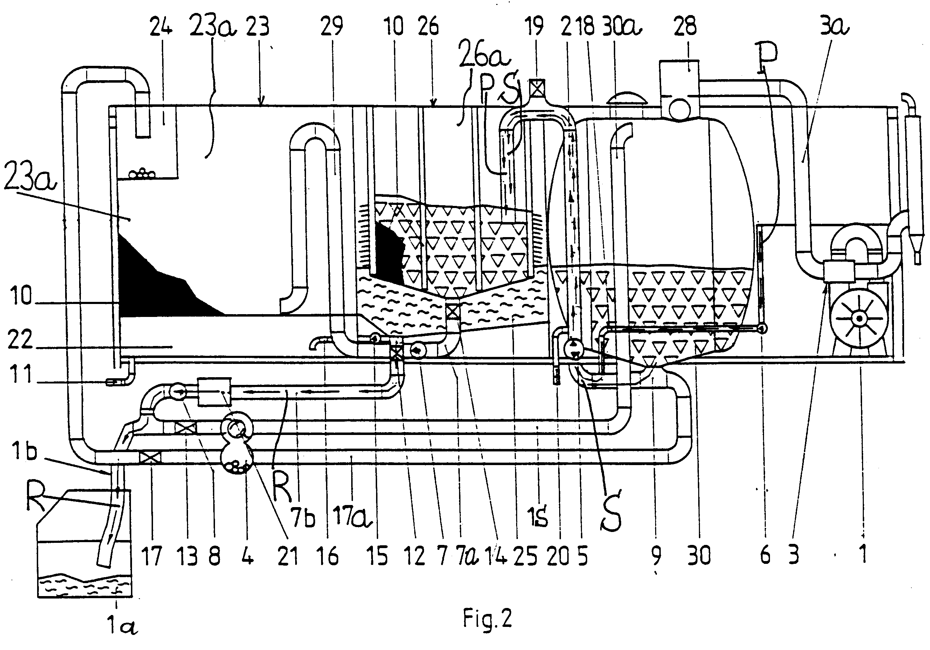

Ist eine Abwassergrube, z. B. Kammergrube 1a, vgl. Fig. 2, zu leeren, wird das Ende eines Saugschlauches 1b einer nicht dargestellten Schlauchhaspel in die Kammergrube eingeführt. Nun wird die Vakuumpumpe 1 gestartet, ein erstes Schlamm- (nachfolgend S-) Ventil 13 geöffnet, und der Inhalt der Kammergrube sowohl hochgesaugt, als auch durch eine Steinfalle 4 geführt, die so ausgebildet und/oder angeordnet ist, daß sie Steine und größere Fremdkörper aussortiert, die in Ihren tieferen Bereich, z. B. eine Mulde abfallen, wie Fig. 1 - 4 zu entnehmen. Dadurch wird eine Zerstörung einer ersten Schlammpumpe (nachfolgend S-Pumpe) 5 wirksam vermieden. Über ein Aufpumprohr 30a gelangt das Gemisch aus Schlamm und Schlammwasser in den Schlammtank 30, wobei das Reinigungs-Schlammventil, nachfolgend RS-Ventil 9 geschlossen gehalten wird; der Schlamm sammelt sich zunächst am Boden des Tanks an. Ist die Kammergrube in vorbestimmter Weise leergesaugt, stellt man die Vakuumpumpe 1 ab und schließt das erste S-Ventil 13, so daß auch eine Teilmenge des Schlammes im Rohr 30a nicht zurückfließen kann. Die Offenstellungen der Ventile werden durch ein Rechteck, die Schließstellungen jeweils durch ein im Rechteck angebrachtes x angegeben. Vor diesem Arbeitsschritt war mit der Vorrichtung bereits gearbeitet worden, was durch eine kleine Menge Restschlamm im ersten Entwässerungsbehälter 26 und eine größere Menge gleichen Restschlammes in dem zweiten Entwässerungsbehälter 23 angedeutet ist (schwarze Darstellung).

Der nachfolgende Arbeitsschritt, vgl. Fig. 2, veranschaulicht die Polymerzugabe und das Rückpumpen des Filtratwassers, was gleichzeitig geschehen kann. Die Polymerzugabe kann auch gleichzeitig mit dem Aufpumpen selbst erfolgen. Beim geschlossenen RS-Ventil 9 wird die erste Schlammpumpe 5 sowie eine Polymerpumpe 6 gestartet, der Schlamm S und das Polymer P entsprechend vermischt und im Aufpumprohr 2 nebst dem Schlammtank 30 hochgepumpt, wobei notwendigerweise ein zweites Schlammventil, nachfolgend S-Ventil 19, geöffnet war. Das Aufpumprohr ist in den oberen Bereich des Entwässerungsbehälters 26 eingeführt, in den der Schlamm nun eingepumpt wird. Währenddessen wird gleichzeitig durch die Polymerpumpe das Flockungsgemisch in den Schlamm S dosiert, als auch optimiert, so daß die Flockung und Entwässerung des Schlammes S in einer Schlammkammer 26a beginnt. Der Entwässerungsbehälter 26 ist von einer Anzahl von Filterwänden, vorzugsweise Siebwänden, umfaßt, die den festeren Bestandteil des Schlammes in der Kammer 26a zurückhalten, den wässrigen Anteil jedoch durch die Siebmaschen in eine erste Filtratkammer 25 übertreten lassen. Am Bodenbereich der Kammer 26a befindet sich ein zweites Schlammventil 14, nachfolgend S-Ventil genannt, während das Restfiltrat aus der Filtratkammer25 auch durch ein Rohrleitungsstück, welches ein Reinigungsfiltratventil 16, nachfolgend RF-Ventil genannt, aufweist, abgelassen werden kann, wenn vorher die Filtrathauptmasse durch eine Filtratpumpe 8 in eine erste Rückleitung 7b weggepumpt worden war.
Fig. 2 veranschaulicht, daß gleichzeitig mit dem Aufpumpen, vgl. Aufpumprohr 2, das Rückpumpen des in der Filtratkammer 25 abgeschiedenen Filtratwasser geschehen kann. Hierfür wird ein weiteres Filtratventil 12, das mit der Kammer 25 in Verbindung steht, geöffnet, etwa gleichzeitig das Schlammventil 13 geschlossen, so daß das Filtratwasser R, da die Filtratpumpe 8 eingeschaltet ist, in die Kammergrube 1a zurückgepumpt wird. Hierbei ist wichtig, eine Bestrahlungskammer, nachfolgend Kammer 21, die einen oder mehrere Bakterien und Keime tötende Strahler, insbesondere Ultraviolettstrahler mit der Wellenlänge 253,7 Nanometer vorzusehen. Das Filtratwasser durchsetzt einen Teil der Kammer und wird dabei von den benachbarten Strahlern keimtötend beeinflußt.

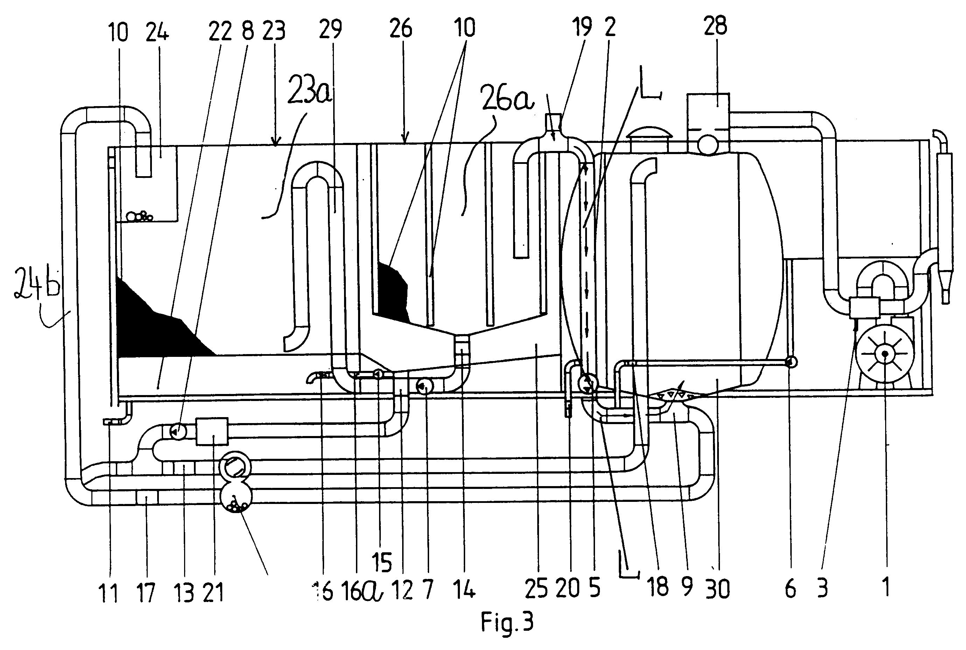

Ist der Inhalt des Schlammtankes 30 in den ersten Entwässerungsbehälter 26 geleert, als auch die erste Filtratkammer 25 leer, indem das Filtratwasser in die Kammergrube 1a zurückgepumpt wurde, werden die erste Schlammpumpe 5, die Polymerpumpe 6 sowie die rückfördernde Filtratpumpe 8 stillgesetzt als auch das RS-Ventil 9, das Filtratventil 12 sowie ein drittes Schlammventil 19 geschlossen. Insoweit ist die erste Hauskläranlage bearbeitet und der Saugschlauch kann aufgerollt werden. Der eingedickte Schlamm verbleibt in der Schlammkammer 26a des Entwässerungsbehälters 26, wie schwarz angedeutet. Das Fahrzeug steht. Nun schaltet die Bedienungsperson, vgl. Fig. 3, zwecks Entleerung des Aufpumprohres 2, nachdem das Schlammventil 19 geöffnet und das RS-Ventil 9 in Richtung zum Boden des Schlammtankes 30 umgeschaltet war, die Schlammpumpe 5 ein.
Wie den Pfeilen der Fig. 3 zu entnehmen, wird das Aufpumprohr im Inneren gründlich dadurch gereinigt und entleert, daß sein Schlamminhalt in den Schlammtank 30 überführt wird. Ist dieser Arbeitsschritt beendet, wird die Schlammpumpe 5 stillgesetzt und die Ventile 19 und 9 geschlossen. Es wird darauf hingewiesen, daß dieser Reinigungsschritt auch einzeln für sich ausgeführt werden kann bzw. in sinngemäß gleicher Weise bei anderen Rohren und Aufpumprohren, in welchen Schlammrückstände verbleiben können und welche mit einer hydraulischen oder pneumatischen Schlammförderpumpe über eine Leitung verbindbar sind bzw. eine solche Pumpe in der eigenen Rohrleitung selbst aufweisen.

Die Reinigungsvorgänge in Bezug auf den Schlammtank 30 und den ersten Entwässerungsbehälter 26, seine Filtratkammer 25 sowie einer Leitung 1S zwischen Aufpumprohr 30a und der Steinfalle bzw. Beginn des Saugrohres (bei Schlammventil 13) wird weiter anhand der Fig. 4 erläutert.
Hier ist die Pumpe 1 als ein Kompressor 1 zur Abgabe von Druckluft in das Anschlußrohr 3a geschaltet, welches im anderen Falle, vgl. Fig. 1, als Saugrohr diente. Hierfür ist die Ventilklappe des Klappenventils 3 entsprechend umgestellt. Die Preßluft gelangt in den Sammeltank 30 und erhöht den Luftdruck hier sowie gleichzeitig im Aufpumprohr 30a, aus welchem Stein- und Schlammreste im Sinne der Pfeile entlang der Leitung 1S in Richtung der Steinfalle 4 transportiert werden. Dieser Bereich der Rohrleitung wird somit gründlich geleert und gesäubert. Gleichzeitig wird das RS-Ventil 9 in Richtung zur dritten Rückleitung 17a geöffnet, so daß Schlammreste, Steine udgl. aus dem Bodenbereich des Schlammtankes 30 ebenfalls zur Steinfalle 4 befördert werden. Da das erste Schlammventil 13 vorher geschlossen war, werden die Steine und Schlammreste S, vgl. linke Seite der Fig. 4, über ein Zulaufrohr 24b in Richtung zum zweiten Entwässerungsbehälter 23 befördert.

Das Ende des Zulaufrohres endet vorzugsweise in einer, einen Sammelrost odgl. aufweisenden Kammer 24. Durch den perforierten Rostboden können kleinere Schlammteile fallen, grobe Fremdkörper und Steine werden aber in der Kammer 24 zurückgehalten.
Gleichzeitig oder zur unterschiedlichen Zeit erfolgt aber auch die Überführung des eingedickten Schlammes aus der ersten Schlammkammer 26a in die zweite Schlammkammer 23a. Hierfür wird das zweite S-Ventil 14 geöffnet, die zweite RS-Schlammpumpe 7 gestartet und der Schlamm über ein Verbindungsrohr 29 in die Schlammkammer 23a des zweiten Entwässerungsbehälters 23 umgepumpt. Somit ist der erste Entwässerungsbehälter 26 weitgehend geleert und gereinigt. Der beim späteren Arbeitsschritt aus einer anderen Kammergrube in den ersten Entwässerungsbehälter 26 neu herangeführte Schlamm- bzw. das Schlammwasser können sich nicht mehr mit dem in diesem Bereich verbliebenden Schlamm vermischen, weil im Behälter 26 überhaupt kein Schlamm von einem früheren Arbeitsvorgang verblieben ist.

Sinngemäß gleiches wird für das Filtratwasser ausgeführt: Die RF-Pumpe 15 wird gestartet und das in der gleichen Filtratleitung befindliche RF-Ventil 16 geöffnet. Der Eingang der Pumpe 15 steht mit dem Bodenbereich der ersten Filtratkammer 25 in Verbindung. Der Filtratwasserrest wird also über die Bauteile 25-15-16 in die zweite Filtratkammer 22 des zweiten Entwässerungsbehälters 23 überführt. Nunmehr ist die Entwässerungsanlage geleert, gereinigt und das Fahrzeug wird in der Regel zur nächsten Hauskläranlage fahren, um diese in gleicher Weise zu reinigen.

Am Ende des Arbeitstages wird das in dem zweiten Entwässerungsbehälter 23 angesammelte Filtratwasser als auch der dort angesammelte Schlamm auf eine Deponie gefahren oder in ähnlicher Weise ausgeleert. Hierfür ist nur beispielsweise ein Entleerungsventil 11 für das Filtratwasser dargestellt. Die Erfindung ist auf die beschriebenen Verfahrensschritte und auf die beschriebenen bzw. dargestellten Vorrichtungsteile nicht beschränkt. Je nach Einzelfall sind entsprechend angepaßte abgewandelte oder ergänzende Verfahrensschritte vorgesehen. Die Vorrichtung kann ferner mit Sicherheitsventilen, Niveaukontrolle, Probestutzen 20 udgl. entsprechend ausgerüstet sein.
Eine vorteilhafte Ausgestaltung der Steinfalle 4 ergibt sich folgendermaßen: Aus der Leitung 1S gelangt der steinhaltige Schlamm zum oberen Teil der Steinfalle 4, in der eine zylindrische Trommel vorhanden ist, die von einem Antriebsmotor über eine Achse in Rotation versetzt wird, sowie Perforationen und ferner zwischen Außenwand der Trommel und der Innenwand der Kammer Schabeelemente. Letztere erstrecken sich schräg, also teilweise radial zur Wand und weisen eine scharfe Schabekante auf, in der Regel ein separat aufgesetztes messerartiges Werkzeug aus Hartmetall. Die Achse soll exzentrisch angeordnet sein. Somit drückt die Trommel den sie durchsetzenden Schlamm in die Leitung 1S, die Schabeelemente reinigen die Innenwand und rücken gleichzeitig die restlichen Steine in den unteren Bereich.
Die Bestrahlungskammer 21 kann ein, insbesondere aus Quarz bestehendes Rohr aufweisen, entlang dessen Filtratwasser R fließt. Mit Abstand und etwa parallel sind vorzugsweise längliche Leuchten am Umfang des Rohres angeordnet, so daß, der Rohrinhalt intensiv bestrahlt wird, insbesondere mit UV-Licht. Die Strahlung wird mit Hilfe von am Umfang verteilt angeordneten Reflektorelementen flächenmäßig verdichtet. Die Leuchten befinden sich etwa im Brennpunkt der insbesondere parabolisch ausgebildeten, insbesondere aus Metall bestehenden Reflektoren.

## Patentansprüche

1. Verfahren zur Verarbeitung und/oder Entwässerung des aus Abwassergruben (1a) entnommenen Schlammwassers (S), vorzugsweise in einer auf einem Fahrzeug angeordneten Entwässerungsanlage, bei dem das Schlammwasser (S) aus einer Abwassergrube (1a) zuerst in einen Schlammtank (30) überführt, anschließend durch ein Flockungsmittel (P) geflockt, nachfolgend in, insbesondere einen, ggf. in mehrere nachgeordnete Entwässerungseinheiten (7, 7a, 7b, 10, 11, 12, 14, 15, 16, 22, 23, 23a, 24, 25, 26, 26a, 29) überführt und der Schlamm (S) entwässert wird, wonach einerseits das entstandene reine Wasser bzw. Filtratwasser (R) wieder in eine bzw. die gleiche Abwassergrube (1a) zurückgeführt, andererseits der vom Filtratwasser (R) abgetrennte, eingedickte Schlamm (S) in einer Schlammkammer (26a) eines Entwässerungsbehälters (26) angesammelt wird,
dadurch gekennzeichnet, daß nach jeder Rückführung des Hauptanteils des Filtratwassers (R) ein Rest an Filtratwasser (R) aus mindestens einem Entwässerungsbehälter (26) in eine zweite Filtratkammer (22) und der entwässerte Schlamm (S) aus dem Entwässerungsbehälter (26) in eine zweite Schlammkammmer (23a) eines zweiten Entwässerungsbehälters (23) überführt werden.

2. Verfahren nach Anspruch 1, dadurch gekennzeichnet, daß außer einem Entwässerungsbehälter (26) auch der Schlammtank (30) nach Rückführung des Rein- bzw. Filtratwassers (R) aus der Entwässerungseinheit (7, 7a, 7b, 10, 11, 12, 14, 15, 16, 22, 23, 23a, 24, 25, 26, 26a, 29) vom Schlamm (S) geleert wird.

3. Verfahren nach Anspruch 1 oder 2, dadurch gekennzeichnet, daß nach Rückführung des Rein- bzw. Filtratwassers (R) aus mindestens einem Entwässerungsbehälter (26) in eine Abwassergrube (1a) die Entwässerungseinheit (7, 7a, 7b, 10, 11, 12, 14, 15, 16, 22, 23, 23a, 24, 25, 26, 26a, 29) als Ganzes vom restlichen Rein- bzw. Filtratwasser (R) und/oder den restlichen restlichen Schlammpartikeln (S) gereinigt wird bzw. diese entleert werden.

4. Verfahren nach einem der vorhergehenden Ansprüche, dadurch gekennzeichnet, daß das von der Abwassergrube (1a) entnommene, in einer Verarbeitungs- und/oder Entwässerungsvorrichtung behandelte gereinigte Wasser bzw. Filtratwasser (R) vor oder während der Rückführung in eine bzw. die gleiche Abwassergrube (1a) einer Keime oder Bakterien zumindest teilweise abtötenden Strahlung ausgesetzt wird.

5. Verfahren nach Anspruch 4, dadurch gekennzeichnet, daß das gereinigte bzw. Filtratwasser (R) durch Ultraviolettlicht bestrahlt wird, dessen Amplitudenmaximum vorzugsweise bei 253,7 Nanometer liegt.

6. Vorrichtung zur Verarbeitung und/oder Entwässerung des aus Abwassergruben (1a), insbesondere Kleinkläranlagen, entnommenen Schlammwassers (S), vorzugsweise in einer auf einem Fahrzeug angeordneten Entwässerungsanlage, die einen Schlammtank (30) zur Erstaufnahme des Schlammwassers (S), eine zugehörige Flockungseinheit und eine oder mehrere, diesen im Fluß des Schlammwassers (S) nachgeordnete Entwässerungseinheiten (7, 7a, 7b, 10, 11, 12, 14, 15, 16, 22, 23, 23a, 24, 25, 26, 26a, 29) aufweist, wobei eine Entwässerungseinheit (7, 7a, 7b, 10, 12, 14, 15, 16, 22, 23, 23a, 24, 25, 26, 26a, 29) einen Bereich (7, 7b, 11, 12, 15, 16, 22, 25) für gereinigtes Wasser bzw. Filtratwasser (R) und einen oder mehrere weitere Bereiche (7, 7a, 14, 23a, 26a, 29) für entwässerten Schlamm (S) aufweist und der Filtratwasserbereich (7, 7b, 11, 12, 15, 16, 22, 25) über eine Rückwasserleitung (7b) mit einem in die Abwassergrube (1a) eintauchbaren Schlauch verbindbar ist, dadurch gekennzeichnet, daß einerseits eine erste Filtratkammer (25) eines mit Siebwänden (10) versehenen ersten Entwässerungsbehälters (26) über eine Filtratpumpe (15), eine Filtratleitung (16a) und ein steuerbares Filtratventil (16) mit mindestens einer nachgeordneten zweiten Filtratkammer (22) mindestens eines zweiten nachgeordneten Entwässerungsbehälters (23) und andererseits eine Schlammkammer (26a) des ersten Entwässerungsbehälters (26) über ein steuerbares Schlammventil (14), eine Schlammrückleitung (7a) und eine Schlammpumpe (7) mit mindestens einer zweiten Schlammkammmer (23a) mindestens eines zweiten nachgeordneten Entwässerungsbehälters (23) in Verbindung stehen.

7. Vorrichtung nach Anspruch 6, dadurch gekennzeichnet, daß ein weiterer Auslaß (bei 9) des Schlammtankes (30) über eine weitere Rückleitung (17a) für den Schlamm (S) über ein steuerbares Ventil (17) in dieser Rückleitung (17a) sowie ein Zulaufrohr (24b) mit einem Einlaß (24a) der zweiten Schlammkammer (23a) des zweiten Entwässerungsbehälters (23) in Verbindung steht.

8. Vorrichtung nach Anspruch 6 und 7, dadurch gekennzeichnet, daß in einer von einer Abwassergrube (1a) zum Schlammtank (30) führenden Schlammwasser (S) aufweisenden Leitung (1S) mindestens eine Steinfalle (4) angeordnet ist, insbesondere eine solche mit rotierender und perforierter Trommel, wobei Schabeelemente zwischen Trommel und Innenwand der Steinfalle (4) angeordnet sind.

9. Vorrichtung nach Anspruch 7 und 8, dadurch gekennzeichnet, daß in der vom Schlammtank (30) zur zweiten Schlammkamer (23a) führenden Leitung (17a) mindestens ein Teil der Steinfalle, ein Gitter oder eine Mulde od. dgl. für Fremdkörper angeordnet ist.

10. Vorrichtung nach einem der vorstehenden Ansprüche, dadurch gekennzeichnet, daß zumindest eine das gereinigte Wasser bzw. Filtratwasser (R) von einem Entwässerungsbehälter (26) bzw. einer Filtratkammer (25) zur Abwassergrube (1a) führende Rückleitung (7b) mit mindestens einer Baueinheit oder Kammer (21) in Verbindung steht, die mit einem oder mehreren optischen Strahlern bzw. Leuchten, mit oder ohne Reflektoren, versehen ist, insbesondere mit mindestens einem keimtötenden Ultraviolettstrahler.

11. Vorrichtung nach Anspruch 10, dadurch gekennzeichnet, daß mindestens ein Teilbereich, insbesondere ein Rohrstück einer Rohrleitung (1S, 7b) und/oder mindestens eine Wand der den Strahler aufnehmenden Kammer (21) aus einem für den Strahler optisch durchlässigen Werkstoff, insbesondere aus Glas oder Kunststoff, besteht.

12. Vorrichtung nach Anspruch 11, dadurch gekennzeichnet, daß die Kammer (21) ein Rohr aus Quarz aufweist, welches am Umfang von, sich mindestens teilweise längs zum Quarzrohr erstreckenden UV-Leuchten umfaßt sowie vom Filtratwasser (R) durchflossen ist.

## Claims

1. Process for the processing and/or drainage of the sludge liquor (S) removed from sewage pits (1a), preferably in a drainage plant arranged on a vehicle, in which process the sludge liquor (S) from a sewage pit (1a) is first of all transferred to a sludge tank (30), then flocculated by a flocculent (P) and subsequently transferred to, in particular one, optionally to a plurality of downstream drainage units (7, 7a, 7b, 10, 11, 12, 14, 15, 16, 22, 23, 23a, 24, 25, 26, 26a, 29) and the sludge (S) is drained, whereupon on the one hand the resulting pure water or filtration water (R) is returned to a or the same sewage pit (1a), and on the other hand the thickened sludge (S) separated off from the filtration water (R) is collected in a sludge chamber (26a) of a drainage receptacle (26), characterised in that, after each return of the major portion of the filtration water (R), a residue of filtration water (R) is transferred from at least one drainage receptacle (26) to a second filtration chamber (22) and the drained sludge (S) is transferred from the drainage receptacle (26) to a second sludge chamber (23a) of a second drainage receptacle (23).

2. Process according to Claim 1, characterised in that, apart from a drainage receptacle (26), the sludge tank (30) too is emptied of the sludge (S) after the return of the pure or filtration water (R) from the drainage unit (7, 7a, 7b, 10, 11, 12, 14, 15, 16, 22, 23, 23a, 24, 25, 26, 26a, 29).

3. Process according to Claim 1 or 2, characterised in that, after the return of the pure or filtration water (R) from at least one drainage receptacle (26) to a sewage pit (1a), the drainage unit (7, 7a, 7b, 10, 11, 12, 14, 15, 16, 22, 23, 23a, 24, 25, 26, 26a, 29) as a whole is cleared of the residual pure or filtration water (R) and/or the residual sludge particles (S), or these are emptied.

4. Process according to one of the preceding claims, characterised in that the purified water or filtration water (R), removed from the sewage pit (1a) and treated in a processing and/or drainage apparatus, is exposed to radiation which at least partly kills germs or bacteria, before or during the return to a or the same sewage pit (1a).

5. Process according to Claim 4, characterised in that the purified or filtration water (R) is irradiated by ultraviolet light, the amplitude maximum of which is preferably 253.7 nanometres.

6. Apparatus for the processing and/or drainage of the sludge liquor (S) removed from sewage pits (1a), in particular small clarification plants, preferably in a drainage plant arranged on a vehicle, which apparatus has a sludge tank (30) for the initial reception of the sludge liquor (S), an associated flocculating unit and one or more drainage units (7, 7a, 7b, 10, 11, 12, 14, 15, 16, 22, 23, 23a, 24, 25, 26, 26a, 29) downstream in the flow of the sludge liquor (S), a drainage unit (7, 7a, 7b, 10, 11, 12, 14, 15, 16, 22, 23, 23a, 24, 25, 26, 26a, 29) having a region (7, 7b, 11, 12, 15, 16, 22, 25) for purified water or filtration water (R) and one or more further regions (7, 7a, 14, 23a, 26a, 29) for drained sludge (S), and the filtration-water region (7, 7b, 11, 12, 15, 16, 22, 25) being connectable via a return-water line (7b) to a hose capable of being plunged into the sewage pit (1a), characterised in that on the one hand a first filtration chamber (25) of a first drainage receptacle (26) equipped with screening walls (10) is connected via a filtration pump (15), a filtration line (16a) and a controllable filtration valve (16) to at least one downstream second filtration chamber (22) of at least one second downstream drainage receptacle (23) and on the other hand a sludge chamber (26a) of the first drainage receptacle (26) is connected via a controllable sludge valve (14), a sludge return line (7a) and a sludge pump (7) to at least one second sludge chamber (23a) of at least one second downstream drainage receptacle (23).

7. Apparatus according to Claim 6, characterised in that a further outlet (at 9) of the sludge tank (30) is connected via a further return line (17a) for the sludge (S), via a controllable valve (17) in this return line (17a) and a supply pipe (24b), to an inlet (24a) of the second sludge chamber (23a) of the second drainage receptacle (23).

8. Apparatus according to Claim 6 and 7, characterised in that at least one stone trap (4), in particular one with a rotating and perforated drum, is arranged in a line (1S) containing sludge liquor (S) leading from a sewage pit (1a) to the sludge tank (30), scraping elements being arranged between the drum and inner wall of the stone trap (4).

9. Apparatus according to Claim 7 and 8, characterised in that at least a part of the stone trap, a grid or a trough or the like for foreign bodies, is arranged in the line (17a) leading from the sludge tank (30) to the second sludge chamber (23a).

10. Apparatus according to one of the preceding claims, characterised in that at least one return line (7b), which leads the purified water or filtration water (R) from a drainage receptacle (26) or a filtration chamber (25) to the sewage pit (1a), is connected to at least one constructional unit or chamber (21) equipped with one or more optical radiators or lamps, with or without reflectors, in particular with at least one germicidal ultraviolet radiator.

11. Apparatus according to Claim 10, characterised in that at least a part-region, in particular a pipe section of a pipeline (1S, 7b) and/or at least a wall of the chamber (21) accommodating the radiator, consists of a material which is optically transparent to the radiator, in particular of glass or plastic.

12. Apparatus according to Claim 11, characterised in that the chamber (21) has a pipe made of quartz which is surrounded at the periphery by UV lamps extending at least partly along the quartz pipe and through which the filtration water (R) flows.

## Revendications

1. Procédé de traitement et/ou de déshydratation du liquide surnageant (S) retiré de fosses d'eaux résiduaires (1a), de préférence dans une installation de déshydratation disposée sur un véhicule, dans lequel le liquide surnageant (S) provenant d'une fosse d'eaux résiduaires (1a) est d'abord transféré dans un réservoir à boues (30), puis floconné à l'aide d'un floculant (P), et transféré en particulier dans une, éventuellement dans plusieurs, unités de déshydratation (7, 7a, 7b, 10, 11, 12, 14, 15, 16, 22, 23, 23a, 24, 25, 26, 26a, 29) où la boue (S) est déshydratée, l'eau purifiée ou filtrée (R) étant ensuite ramenée dans une ou la même fosse d'eaux résiduaires (1a), et la boue (S) épaissie, séparée de l'eau filtrée (R), étant collectée dans une chambre à boues (26a) d'un récipient de déshydratation (26),
caractérisé en ce que, après chaque retour de la majeure partie de l'eau filtrée (R), un reste d'eau filtrée (R) d'au moins un récipient de déshydratation (26) est transféré dans une deuxième chambre de filtrage (22), et que la boue déshydratée (S) du récipient de déshydratation (26) est transférée dans une deuxième chambre à boues (23a) d'un deuxième récipient de déshydratation (23).

2. Procédé selon la revendication 1,
caractérisé par le fait qu'outre un récipient de déshydratation (26), le récipient à boues (30) est aussi vidé des boues (S) après le retour de l'eau purifiée ou filtrée (R) de l'unité de déshydratation (7, 7a, 7b, 10, 11, 12, 14, 15, 16, 22, 23, 23a, 24, 25, 26, 26a, 29).

3. Procédé selon la revendication 1 ou 2,
caractérisé par le fait qu'après le retour de l'eau purifiée ou filtrée (R) d'au moins un récipient de déshydratation (26) dans une fosse d'eaux résiduaires (1a), l'unité de déshydratation (7, 7a, 7b, 10, 11, 12, 14, 15, 16, 22, 23, 23a, 24, 25, 26, 26a, 29) est dans sa totalité purgée de l'eau purifiée ou filtrée (R) restante et/ou des particules de boue (S) restantes, ces dernières étant enlevées.

4. Procédé selon l'une des revendications précédentes,
caractérisé par le fait que l'eau purifiée ou filtrée (R) prélevée dans la fosse d'eaux résiduaires (1a) et traitée dans une installation de traitement et/ou de déshydratation est exposée, avant ou pendant le retour dans une fosse ou la même fosse d'eaux résiduaires (1a), à des rayons tuant au moins partiellement les germes ou bactéries.

5. Procédé selon la revendication 4,
caractérisé en ce que l'eau purifiée ou filtrée (R) est soumise à des rayons ultraviolets dont l'amplitude maximale est de préférence située aux environs de 253,7 nanomètres.

6. Dispositif de traitement et/ou de déshydratation du liquide surnageant (S) prélevé dans des fosses d'eaux résiduaires (1a) en particulier des installations d'épuration de petites dimensions, de préférence dans une installation de déshydratation disposée sur un véhicule, ce dispositif comportant un réservoir à boues (30) pour accueillir en premier le liquide surnageant (S), une unité de flocage associée, et une ou plusieurs unités de déshydratation (7, 7a, 7b, 10, 11, 12, 14, 15, 16, 22, 23, 23a, 24, 25, 26, 26a, 29), placées en aval des unités précédentes, dans la direction de circulation du liquide surnageant (S), une unité de déshydratation (7, 7a, 7b, 10, 11, 12, 14, 15, 16, 22, 23, 23a, 24, 25, 25, 26, 26a, 29) présentant une région (7, 7b, 11, 12, 15, 16, 22, 25) pour l'eau purifiée ou filtrée (R), et une ou plusieurs régions supplémentaires (7, 7a, 14, 23a, 26a, 29) pour la boue déshydratée (S), la région (7, 7b, 11, 12, 15, 16, 22, 25) pour l'eau filtrée pouvant être reliée par une conduite (7b) de retour des eaux à un tuyau flexible pouvant plonger dans la fosse d'eaux résiduaires (1a),
caractérisé par le fait que, d'une part, une première chambre de filtrage (25) d'un premier récipient de déshydratation (26) muni de parois de tamisage (10) est reliée par une pompe (15), une conduite (16a) et une vanne réglable (16) à au moins une deuxième chambre de filtrage (22) située en aval d'au moins un deuxième récipient de déshydratation (23) situé en aval, et que, d'autre part, une chambre à boues (26a) du premier récipient de déshydratation (26) est reliée par une vanne à boue réglable (14), une conduite de retour des boues (7a), et une pompe à boues (7), à au moins une deuxième chambre à boues (23a) d'au moins un deuxième récipient de déshydratation (23) situé en aval.

7. Dispositif selon la revendication 6,
caractérisé par le fait qu'une deuxième sortie (en 9) du réservoir à boues (30) est reliée par une conduite supplémentaire (17a) de retour des boues (S) au moyen d'une vanne réglable (17) de cette conduite de retour (17a), ainsi que par une conduite d'arrivée (24b), à une admission (24a) de la deuxième chambre à boues (23a) du deuxième récipient de déshydratation (23).

8. Dispositif selon la revendication 6 et 7,
caractérisé par le fait que, dans une conduite (1S) menant d'une fosse d'eaux résiduaires (1a) vers le réservoir à boues (30), et contenant du liquide surnageant (S), est disposé au moins un piège à cailloux (4), en particulier un piège à cailloux à tambour rotatif et perforé, des éléments de râclage étant disposés entre le tambour et la paroi intérieure du piège à cailloux (4).

9. Dispositif selon la revendication 7 et 8,
caractérisé par le fait que, dans la conduite (17a) menant du réservoir à boues (30) vers la deuxième chambre à boues (23a), est disposé au moins une partie du piège à cailloux, une grille ou un creux ou analogue pour corps étrangers.

10. Dispositif selon l'une des revendications précédentes,
caractérisé en ce qu'au moins une conduite de retour (7b) ramenant l'eau purifiée ou filtrée (R) d'un récipient de déshydratation (26) ou d'une chambre de filtrage (25) vers la fosse d'eaux résiduaires (1a) est en liaison avec au moins un module ou une chambre (21) munie d'un ou de plusieurs émetteurs ou lampes optiques, sans ou avec des réflecteurs, en particulier au moins un émetteur de rayons ultraviolets germicides.

11. Dispositif selon la revendication 10,
caractérisé en ce qu'au moins une région partielle, en particulier un segment d'une conduite tubulaire (1S, 7b) et/ou au moins une paroi de la chambre (21) qui loge l'émetteur de rayons est réalisé en une matière laissant passer les rayons optiques de l'émetteur, en particulier en verre ou en une matière synthétique.

12. Dispositif selon la revendication 11,
caractérisé en ce que la chambre (21) présente un tube en cristal dont la périphérie est entourée par des lampes à rayons ultraviolets qui s'étendent au moins partiellement dans la direction longitudinale du tube en cristal qui est en outre traversé par l'eau filtrée (R).
